# EUROPÄISCHE PATENTANMELDUNG

(11) **EP 1 818 238 A2**
(43) Veröffentlichungstag der Anmeldung: **15.08.2007**
(21) Anmeldenummer: 07100357.8
(22) Anmeldetag: 11.01.2007
(51) Int. Cl.: B61D 27/00

(54) **Verfahren zur Steuerung eines Lüfters**

(30) Priorität: 13.02.2006 DE 102006006548
(71) Anmelder: SIEMENS AKTIENGESELLSCHAFT, 80333 München (DE)
(72) Erfinder: Kistner, Michael, 96163, Gundelsheim (DE); Engelsberg, Dirk, 91058, Erlangen (DE); Vogel, Andreas, 91336, Heroldsbach (DE)

(57) **Zusammenfassung**

Die Erfindung betrifft ein Verfahren zur Steuerung eines Lüfters, der sich in einem Fahrzeug, insbesondere in einem Schienenfahrzeug, befindet. Es ist vorgesehen, dass die Drehzahl des Lüfters durch Signale verkleinert und wieder vergrößert wird, die von einem Ortungssystem für die Position des Fahrzeuges ausgehen. Dieses Ortungssystem kann ein vorhandenes Ortungssystem für die Ansteuerung einer Fahrgastinformationseinrichtung sein. Beispielsweise ist das Ortungssystem ein GPS-System.

## Beschreibung

Die Erfindung betrifft ein Verfahren zur Steuerung eines Lüfters, der sich in einem Fahrzeug, insbesondere in einem Schienenfahrzeug, befindet.

Besonders bei Schienenfahrzeugen ist es erforderlich, dass sie im Bahnhofsbereich möglichst wenig Geräusche abgeben. Von einem stehenden Schienenfahrzeug und auch bei einem Fahrzeug, das langsam fährt, werden die meisten Geräusche durch den Lüfter erzeugt, der zur Kühlung von Komponenten vorgesehen ist. Auch die Lüfter der Klimaanlagen für den Innenraum erzeugen Geräusche.

Es ist daher notwendig, dass die Drehzahl eines Lüfters im Bahnhofsbereich reduziert ist, um die Geräuschbelästigung der am Bahnsteig wartenden Personen zu vermindern.

Bisher war es üblich, dass die Drehzahl des Lüfters im Bahnhofsbereich manuell vom Fahrzeugführer durch Betätigen eines Schalters verkleinert und später wieder vergrößert wurde. Es wurde auch schon eine von der Geschwindigkeit des Fahrzeuges abhängige Steuerung des Lüfters vorgeschlagen. Das führt jedoch dazu, dass die Drehzahl des Lüfters auch bei einer Langsamfahrt auf einer freien Strecke oder bei einem Betriebshalt außerhalb des Bahnhofes verkleinert wird, obwohl hier keine Personen durch die Geräusche gestört werden können. Es kommt so zu einer unerwünschten Reduzierung der Lüfterleistung.

Der Erfindung liegt die Aufgabe zugrunde, ein Verfahren zur Steuerung eines Lüfters, der sich in einem Fahrzeug befindet, anzugeben, das den Fahrzeugführer entlastet und trotzdem die Drehzahl des Lüfters ausschließlich dann reduziert hält, wenn sich das Fahrzeug im Bereich einer Haltestelle oder eines Bahnhofes befindet.

Die Aufgabe wird gemäß der Erfindung dadurch gelöst, dass die Drehzahl des Lüfters durch Signale verkleinert und wieder vergrößert wird, die von einem Ortungssystem für die Position des Fahrzeuges ausgehen.

Damit wird der Vorteil erzielt, dass der Fahrzeugführer zum Verändern der Drehzahl des Lüfters nicht tätig werden muss. Im Vergleich zur von der Geschwindigkeit des Fahrzeuges abhängigen Steuerung des Lüfters wird der Vorteil erzielt, dass eine betriebsbedingte Verminderung der Geschwindigkeit auf freier Strecke außerhalb einer Haltestelle oder eines Bahnhofes die Drehzahl des Lüfters nicht verkleinert. Die Drehzahl wird nur im Bereich eines Bahnhofs oder einer Haltestelle verkleinert.

Als Ortungssystem für die Steuerung des Lüfters dient beispielsweise ein vorhandenes Ortungssystem für die Ansteuerung einer Fahrgastinformationseinrichtung.

Wenn ohnehin durch ein vorhandenes Ortungssystem eine automatische Lautsprecherdurchsage ausgelöst wird, die die Fahrgäste auf die nächste Haltestelle oder den nächsten Bahnhof hinweist, ist dieses Ortungssystem gut geeignet, auch die Verkleinerung der Drehzahl des Lüfters auszulösen. Das Ortungssystem löst später die erneute Vergrößerung der Drehzahl des Lüfters aus, wenn es z. B. auch eine Informationsdurchsage für die Fahrgäste nach dem Verlassen der Haltestelle oder des Bahnhofs auslöst. Die Durchsagen für die Fahrgäste werden nur vor oder nach einer Haltestelle oder einem Bahnhof und nicht vor oder nach einem betriebsbedingten Anhalten ausgelöst. Folglich wird die Drehzahl des Lüfters nur im Bereich der Haltestelle oder des Bahnhofs niedriger gehalten, wo auch Personen durch Geräusche gestört werden könnten.

Beispielsweise kommuniziert das Ortungssystem mit Sendern an der Strecke. Nach einer Alternative ist das Ortungssystem ein satellitengestütztes System, z. B. ein GPS-System, das von einem Satelliten angesteuert wird.

Es ist auch eine Kombination möglich.

Es ist vorteilhaft sichergestellt, dass die Drehzahl des Lüfters nur im Bereich eines Bahnhofs oder einer Haltestelle verkleinert ist.

Beispielsweise wird die Drehzahl des Lüfters, wenn ein Schwellwert der Temperatur überschritten wird, um eine Stufe angehoben und wenn der Schwellwert der Temperatur wieder unterschritten wird, wieder um die Stufe abgesenkt. Diese temperaturabhängige stufenweise Steuerung der Drehzahl des Lüfters führt dazu, dass der Kühleffekt bei hoher Außentemperatur stärker ist als bei niedriger Außentemperatur.

Es sind mehrere Stufen für die Drehzahl des Lüfters möglich. Zum Beispiel kann der Lüfter ausgeschaltet sein, mit einer niedrigen Drehzahl betrieben werden oder mit einer hohen Drehzahl betrieben werden. Welche dieser drei Stufen ausgewählt wird, hängt von der Außentemperatur oder von der Temperatur der zu kühlenden Komponente ab. Es sind dann zwei Schwellwerte für die Temperatur vorgesehen. Bei dem unteren Schwellwert wechselt der Lüfter zwischen dem ausgeschalteten Zustand und der niedrigen Drehzahl und bei dem oberen Schwellwert zwischen der niedrigen und der hohen Drehzahl.

Beispielsweise erfolgt das Anheben der Drehzahl um die Stufe bei Überschreiten des höheren Schwellwertes eines Schwellwertpaares der Temperatur und das Absenken der Drehzahl um die Stufe erfolgt bei Unterschreiten des niedrigeren Schwellwertes des Schwellwertpaares. Durch den Einsatz des Schwellwertpaares wird der Vorteil erzielt, dass ein schnelles Hin- und Herschalten der Drehzahl des Lüfters vermieden wird.

Beispielsweise wird durch die Signale, die vom Ortungssystem ausgehen, der Schwellwert der Temperatur um eine Temperaturspanne erhöht, um die Drehzahl des Lüfters zu verkleinern. Später wird durch die Signale der Schwellwert der Temperatur wieder um diese Temperaturspanne verringert, um die Drehzahl des Lüfters wieder auf ihren früheren Wert zu vergrößern. Es wird also, während sich das Fahrzeug im Bereich einer Haltestelle oder eines Bahnhofes befindet, der Schwellwert der Temperatur erhöht gehalten, so dass die Drehzahl des Lüfters um eine Stufe kleiner ist, falls die Temperatur innerhalb der genannten Temperaturspanne liegt. Das führt zur gewünschten Verminderung der Geräusche.

Es wird der Vorteil erzielt, dass die vorhandene temperaturabhängige Steuerung des Lüfters verwendet werden kann, um die Drehzahl des Lüfters im Bereich einer Haltestelle oder eines Bahnhofs zu vermindern. Damit wird der Vorteil erzielt, dass weniger elektronische Bauteile als sonst erforderlich sind. Das Verändern eines Schwellwertes der Temperatur ist nämlich einfacher durchführbar als der Einsatz eines zusätzlichen Steuerungsverfahrens.

Falls mehrere Schwellwerte der Temperatur und mehrere Stufen der Drehzahl vorgesehen sind, werden alle vorhandenen Schwellwerte der Temperatur durch das Signal, das von einem Ortungssystem ausgeht, um die Temperaturspanne erhöht.

Beispielsweise wird durch die Signale von einer ersten auf eine zweite Kennlinie und später wieder von der zweiten auf die erste Kennlinie umgeschaltet, wobei die Kennlinien die Drehzahl des Lüfters stufenlos in Abhängigkeit von der Temperatur steuern und die zweite Kennlinie bei gleicher Temperatur eine kleinere Drehzahl bewirkt als die erste Kennlinie.

Durch die Signale, die vom Ortungssystem ausgehen und zum Erkennen des Bahnhofsbereiches dienen, wird also zwischen zwei Kennlinien umgeschaltet, von denen die erste außerhalb und die zweite innerhalb des Bahnhofbereiches die Drehzahl des Lüfters stufenlos in Abhängigkeit von der Temperatur der zu kühlenden Komponente oder der Umgebung steuert, wobei im Bahnhofsbereich eine verkleinerte Drehzahl gegeben ist.

Mit dem Verfahren nach der Erfindung wird insbesondere der Vorteil erzielt, dass die Geräuscheinwirkungen auf Personen an einer Haltestelle oder auf einem Bahnsteig, die von den Lüftern eines Fahrzeuges, insbesondere eines Schienenfahrzeuges, ausgehen, vermindert werden. Dazu ist es nicht notwendig, dass der Fahrzeugführer tätig wird. Außerdem ist sichergestellt, dass die für eine optimale Kühlung erforderliche Drehzahl des Lüfters bei einem Betriebshalt außerhalb einer Haltestelle oder eines Bahnhofes oder bei einer Langsamfahrt nicht verkleinert wird.

## Patentansprüche

1. Verfahren zur Steuerung eines Lüfters, der sich in einem Fahrzeug, insbesondere in einem Schienenfahrzeug, befindet, **dadurch gekennzeichnet, dass** die Drehzahl des Lüfters durch Signale verkleinert und wieder vergrößert wird, die von einem Ortungssystem für die Position des Fahrzeuges ausgehen.

2. Verfahren nach Anspruch 1, **dadurch gekennzeichnet, dass** als Ortungssystem für die Steuerung des Lüfters ein vorhandenes Ortungssystem für die Ansteuerung einer Fahrgastinformationseinrichtung dient.

3. Verfahren nach einem der Ansprüche 1 oder 2, **dadurch gekennzeichnet, dass** das Ortungssystem mit Sendern an der Strecke kommuniziert.

4. Verfahren nach einem der Ansprüche 1 bis 3, **dadurch gekennzeichnet, dass** das Ortungssystem ein satellitengestütztes System ist.

5. Verfahren nach einem der Ansprüche 1 bis 4, **dadurch gekennzeichnet, dass** die Drehzahl des Lüfters, wenn ein Schwellwert der Temperatur überschritten wird, um eine Stufe angehoben wird und, wenn der Schwellwert der Temperatur wieder unterschritten wird, wieder um die Stufe abgesenkt wird.

6. Verfahren nach Anspruch 5, **dadurch gekennzeichnet, dass** das Anheben der Drehzahl um die Stufe bei Überschreiten des höheren Schwellwertes eines Schwellwertpaares der Temperaturerfolgt und das Absenken der Drehzahl um die Stufe bei Unterschreiten des niedrigeren Schwellwertes des Schwellwertpaares.

7. Verfahren nach einem der Ansprüche 5 oder 6, **dadurch gekennzeichnet, dass** durch die Signale der Schwellwert der Temperatur um eine Temperaturspanne erhöht wird, um die Drehzahl des Lüfters zu verkleinern, und dass später durch die Signale der Schwellwert der Temperatur wieder um die Temperaturspanne verringert wird, um die Drehzahl des Lüfters wieder auf ihren früheren Wert zu vergrößern.

8. Verfahren nach einem der Ansprüche 1 bis 7, **dadurch gekennzeichnet, dass** durch die Signale von einer ersten auf eine zweite Kennlinie und später wieder von der zweiten auf die erste Kennlinie umgeschaltet wird, dass die Kennlinien die Drehzahl des Lüfters stufenlos in Abhängigkeit von der Temperatur steuern, wobei die zweite Kennlinie bei gleicher Temperatur eine kleinere Drehzahl bewirkt als die erste Kennlinie.
